# EUROPÄISCHE PATENTSCHRIFT

(11) **EP 2 193 850 B1**
(45) Veröffentlichungstag und Bekanntmachung des Hinweises auf die Patenterteilung: **27.02.2013**
(21) Anmeldenummer: 08021040.4
(22) Anmeldetag: 04.12.2008
(51) Int. Cl.: B02C 15/00, F16J 15/30, F16J 15/44

(54) **Kohlemühle**
Coal mill
Broyeur de charbon

(43) Veröffentlichungstag der Anmeldung: 09.06.2010
(73) Patentinhaber: VSE Aktiengesellschaft, 66121 Saarbrücken (DE)
(72) Erfinder: Kaiser, Bernd, 66539 Neunkirchen (DE)
(74) Vertreter: Rohmann, Michael

(56) Entgegenhaltungen:
- DE-A1- 3 244 362
- US-A- 2 743 949
- US-A- 4 441 720
- US-A- 5 039 115
- US-A- 6 021 967

## Beschreibung

Die Erfindung betrifft eine Kohlemühle mit einem Gehäuse, einem Antrieb, einer Antriebswelle und einem Mahlschüsselträger.

Kohlemühlen der eingangs beschriebenen Art sind aus der Praxis grundsätzlich bekannt. Dabei hat es sich bewährt, dass die Umgebung und der Antrieb der Kohlemühle durch eine Labyrinthdichtung vor aus dem Gehäuse der Mühle austretender Luft und abrasiven Teilchen, insbesondere Kohlenstaub geschützt werden. Diese Dichtungen werden um eine Antriebswelle des Mahlschüsselträgers angeordnet und trennen den Antrieb von dem Gehäuse, in dem der Mahlschüsselträger mit der Mahlschüssel und den zugehörigen Mahlwalzen angeordnet ist. Nachteilig bei den aus der Praxis bekannten Labyrinthdichtungen ist, dass eine Montage der Labyrinthdichtungen nur dann möglich ist, wenn der Mahlschüsselträger ausgebaut ist. Nach dem Befestigen der Labyrinthdichtung, beispielsweise an einem gehäuseseitigen Tragring, wird der Mahlschüsselträger durch die eine Öffnung definierende Labyrinthdichtung abgesenkt und wieder mit dem Antrieb der Kohlemühle verbunden. Dabei ist eine auf wenige Bruchteile eines Millimeters genaue Justierung des Mahlschüsselträgers beim Absenken erforderlich, was in der Praxis nicht zuverlässig realisierbar ist. Daher wird die aus der Praxis bekannte Labyrinthdichtung bei der Montage häufig beschädigt, wodurch die Standzeit dieser Dichtungen wesentlich verkürzt wird.

Aus der DE-A-32 44 362 A1 ist eine Kohlemühle mit einem Gehäuse, einem Antrieb, einer Antriebswelle und einem Mahlschüsselträger bekannt, wobei die Antriebswelle von einem gehäuseseitigen Tragring umgeben ist, eine Dichtung die Antriebswelle vollständig umläuft und die Dichtung an der Antriebswelle anliegt und somit die Antriebswelle gegen den Tragring abdichtet. Die Dichtung wird aus zumindest zwei Dichtungssegmenten gebildet, die sich zu einer ringförmigen Dichtung ergänzen.

Der Erfindung liegt daher das technische Problem zugrunde, eine Kohlemühle anzugeben, deren Dichtung problemlos zu montieren ist bzw. einfach austauschbar ist und deren Dichtung sich durch eine lange Standzeit auszeichnet

Zur Lösung des technischen Problems lehrt die Erfindung eine Kohlemühle mit einem Gehäuse, einem Antrieb, einer Antriebswelle und einem Mahlschüsselträger, gemäß Anspruch 1.

Eine erfindungsgemäße Kohlemühle wird insbesondere für die Herstellung von Kohlenstaub eingesetzt, der in Kohlekraftwerken zur Erzeugung von Wärme bzw. Wasserdampf verbrannt wird. Gehäuse meint im Rahmen der Erfindung insbesondere den Teil der Kohlemühle, in dem ein Mahlwerk angeordnet ist, das in einer Mahlschüssel laufende Walzen zum Zerkleinern der Kohle sowie einen Mahlschüsselträger aufweist. Gemäß einer bevorzugten Ausführungsform ist die Antriebswelle einstückig an den Mahlschüsseiträger angeschlossen. Es liegt im Rahmen der Erfindung, dass die Antriebswelle im Querschnitt rund bzw. kreissymmetrisch ausgestaltet ist und in einer bevorzugten Ausführungsform zumindest abschnittsweise zylinderförmig ausgebildet ist. Es empfiehlt sich, dass zumindest ein Abschnitt der Antriebswelle von einer vorzugsweise zylinderförmigen Hülse bzw. Schleißhülse umgeben ist. Es liegt dabei im Rahmen der Erfindung, dass die Hülse bzw. Schleißhülse drehfest mit der Antriebswelle verbunden ist.

Gemäß einer bevorzugten Ausführungsform ist der Tragring an das Gehäuse angeschlossen und umgibt die Antriebswelle vorzugsweise in dem von der Hülse umgebenen Abschnitt der Antriebswelle vollständig bzw. im Wesentlichen vollständig. In der erfindungsgemäßen Kohlemühle ist die Dichtung drehfest an den Tragring angeschlossen. Mit anderen Worten dreht die Dichtung nicht mit der Antriebswelle des Mahlschüsselträgers mit. Es liegt im Rahmen der Erfindung, dass die Dichtung mit einer Dichtfläche vollumfänglich und formschlüssig und bevorzugt reibschlüssig an der Antriebswelle bzw. an der Hülse anliegt.

Zweckmäßigerweise besteht die Dichtung zumindest größtenteils und vorzugsweise vollständig aus Graphit. In einer bevorzugten Ausführungsform ist das Material, aus dem die Dichtung gefertigt ist, weicher als das Material, aus dem die Antriebswelle bzw. die Hülse gefertigt ist. Es liegt im Rahmen der Erfindung, dass beim Betrieb der Kohlemühle ein Verschleiß bzw. Abrieb an der Dichtung erfolgt und die Antriebswelle bzw. Hülse keinem bzw. im Wesentlichen keinem Verschleiß unterliegt.

Gemäß der Erfindung ist die Dichtung aus zumindest zwei und vorzugsweise zumindest vier Dichtungssegmenten gebildet wird, die sich zu der ringförmigen Dichtung ergänzen. In einer besonders bevorzugten Ausführungsform wird die Dichtung von acht Dichtungssegmenten gebildet, die sich zu einer ringförmigen Dichtung ergänzen. Zweckmäßigerweise verfügt zumindest ein Dichtungssegment an seinen beiden Enden über jeweils zumindest ein Formschlusselement, wobei die Formschlusselemente des Dichtungssegments mit jeweils zumindest einem komplementären Formschlusselement eines benachbarten Dichtungssegmentes bzw. der beiden benachbarten Dichtungssegmente zusammenwirken. Die Formschlusselemente und komplementären Formschlusselemente sind mit der Maßgabe ausgestaltet, dass die von den Dichtungssegmenten gebildete Dichtfläche vollumfänglich bzw. im Wesentlichen vollumfänglich an der Antriebswelle bzw. der Hülse anlieget. Gemäß einer Ausführungsform weist zumindest ein Dichtungssegment an seinen beiden Enden jeweils zumindest einen Zapfen auf, welche Zapfen jeweils in endständige Ausnehmungen eines benachbarten Dichtungssegmentes bzw. benachbarter Dichtungssegmente eingreifen. Es empfiehlt sich, dass zwei verschiedene Arten von Dichtungssegmenten verwendet werden, wobei eine erste Gruppe von Dichtungssegmenten an den beiden Enden eines Dichtungssegmentes jeweils zumindest einen Zapfen aufweist und eine zweite Gruppe von Dichtungssegmenten an den beiden Enden eines Dichtungssegmentes jeweils zumindest eine Ausnehmung zur Aufnahme der Zapfen aufweist.

Gemäß einer bevorzugten Ausführungsform ist der Formschluss zwischen zwei benachbarten Dichtungssegmenten mit der Maßgabe ausgestaltet, dass zwischen den beiden Dichtungssegmenten ein Spiel von 1 mm bis 5 mm und bevorzugt von 2 mm bis 4 mm besteht. Auf diese Weise wird zuverlässig gewährleistet, dass die Dichtungssegmente auch dann formschlüssig bzw. reibschlüssig an der Antriebswelle bzw. an der Hülse anliegen können, wenn betriebsbedingt die antriebswellenseitige Oberfläche bzw. Dichtfläche der Dichtungssegmente abgescheuert bzw. abgerieben ist.

Vorzugsweise ist die Dichtung mittels eines Spannelements an die Antriebswelle bzw. an die Hülse anpressbar bzw. angepresst. Die Dichtung wird zweckmäßigerweise mittels Federkraft in radialer Richtung gegen die Antriebswelle bzw. Hülse gepresst bzw. gedrückt. Das Spannelement gewährleistet, dass die Dichtungssegmente auch dann zuverlässig und formschlüssig bzw. reibschlüssig an der Antriebswelle bzw. Hülse anliegen, wenn verschleißbedingt die Dichtfläche der Dichtungssegmente abgerieben wurde bzw. die radiale Dicke der Dichtungssegmente abnimmt. Zweckmäßigerweise werden die einzelnen Dichtungssegmente durch das Spannelement unter Verminderung des Spiels zwischen den jeweils benachbarten Dichtungssegmenten mit der Maßgabe aneinander geschoben, dass die einzelnen Dichtungssegmente bzw. die daraus resultierende Dichtung formschlüssig bzw. reibschlüssig an der Antriebswelle/ der Hülse anliegen/anliegt. Zweckmäßigerweise umläuft das Spannelement die Dichtung vollständig bzw. im Wesentlichen vollständig, und zwar bevorzugt auf der Außenseite der Dichtung. Außenseite meint im Rahmen der Erfindung die Seite bzw. Oberfläche der Dichtung, die der antriebswellenseitigen Dichtfläche gegenüberliegt und vorzugsweise parallel bzw. im Wesentlichen parallel zur Antriebswelle orientiert ist.

Es liegt im Rahmen der Erfindung, dass das Spannelement ein Zugfederstrang ist. In einer bevorzugten Ausführungsform ist der Zugfederstrang als helixförmige Feder ausgestaltet. Zweckmäßigerweise verfügen die beiden Enden der helixförmigen Feder über Verbindungselemente, so dass die beiden Enden im montierten Zustand des Zugfederstrangs aneinander gekoppelt sind.

Vorzugsweise weist die Dichtung auf der Außenseite eine umlaufende Aufnahmenut auf, in der das Spannelement aufgenommen ist. Gemäß einer bevorzugten Ausführungsform weisen die Dichtungssegmente jeweils auf ihrer Außenseite über ihre vollständige Länge eine Aufnahmenut auf, wobei die einzelnen Aufnahmenuten der Dichtungssegmente jeweils miteinander fluchten und sich zur umlaufenden Aufnahmenut ergänzen. Eine vorteilhafte Ausführungsform ist **dadurch gekennzeichnet, dass** zumindest ein Dichtungssegment und bevorzugt jedes Dichtungssegment eine Vertiefung bzw. Kerbe aufweist, welche Vertiefung bzw. Kerbe mit der Maßgabe mit der Aufnahmenut verbunden ist, dass das Spannelement bzw. der Zugfederstrang mit einem geeigneten Werkzeug aus der Aufnahmenut hebelbar bzw. hebbar ist.

Gemäß einer bevorzugten Ausführungsform ist an den Tragring ein Dichtungseinsatzgehäuse mit einem Deckel angeschlossen, wobei zwischen dem Dichtungseinsatzgehäuse und dem Deckel ein Hohlraum ausgebildet ist, in dem die Dichtung aufgenommen ist. Zweckmäßigerweise ist das Dichtungsgehäuse ringförmig ausgestaltet und umläuft die Antriebswelle berührungsfrei und vollständig bzw. im Wesentlichen vollständig. Vorzugsweise wird das Dichtungseinsatzgehäuse von einem L-Profil gebildet, wobei ein Schenkel des L-Profils parallel bzw. im Wesentlichen parallel zur Drehachse der Antriebswelle und der andere Schenkel senkrecht bzw. im Wesentlichen senkrecht zur Drehachse der Antriebswelle orientiert ist. Zweckmäßigerweise ist der senkrecht bzw. im Wesentlichen senkrecht zur Drehachse der Antriebswelle orientierte Schenkel des Dichtungseinsatzgehäuses an den Tragring vorzugsweise mit zumindest einer Schraubverbindung angeschlossen. Es liegt im Rahmen der Erfindung, dass die Dichtung formschlüssig an dem senkrecht bzw. im Wesentlichen senkrecht zur Drehachse der Antriebswelle orientierten Schenkel des Dichtungseinsatzgehäuses anliegt.

Es empfiehlt sich, dass der Deckel ringförmig ausgestaltet ist und vorzugsweise über zumindest eine Schraubverbindung an den parallel bzw. im Wesentlichen parallel zur Drehachse der Antriebswelle ausgerichteten Schenkel des Dichtungseinsatzgehäuses angeschlossen ist. Gemäß einer Ausführungsform umläuft der Deckel die Antriebswelle berührungsfrei.

Es liegt im Rahmen der Erfindung, dass die Dichtung verdrehsicher in dem Hohlraum angeordnet ist, wobei zumindest ein deckelseitiges Arretierungselement mit zumindest einem dichtungsseitigen, komplementären Arretierungselement zusammenwirkt. Im Ergebnis ist ein Mitdrehen der Dichtung mit der Antriebswelle bzw. Hülse nicht möglich. Vorzugsweise ist das deckelseitige Arretierungselement als bevorzugt quaderförmige Erhebung bzw. als Keil ausgestaltet und greift kraftschlüssig in das dichtungsseitige, komplementäre Arretierungselement. Das dichtungsseitige komplementäre Arretierungselement ist zweckmäßigerweise als Nut bzw. Ausnehmung ausgestaltet. Empfohlenermaßen sind das Arretierungselement und das komplementäre Arretierungselement in radialer Richtung in Bezug auf die Antriebswelle bzw. Hülse ausgerichtet. Gemäß einer bevorzugten Ausführungsform weist jedes Dichtungssegment zumindest ein und vorzugsweise zwei komplementäre Arretierungselemente auf, die mit entsprechenden, deckelseitigen Arretierungselementen zusammenwirken.

Zweckmäßigerweise wird zur Montage der Dichtung zunächst das ringförmige Dichtungseinsatzgehäuse an dem Tragring fixiert bzw. mit Schraubverbindungen befestigt. Danach empfiehlt es sich, einen vorzugsweise von vier Segmenten gebildeten Montagering um die Antriebswelle herum einzurichten, auf dem die gemäß einer bevorzugten Ausführungsform aus acht Dichtungssegmenten gebildete Dichtung zusammengesetzt wird. Empfohlenermaßen wird der Zugfederstrang mittels eines bevorzugt kunststoffummantelten Drahtes entlang der Aufnahmenut um die Dichtung gezogen. Es empfiehlt sich, die mit Verschlusselementen bzw. Haken versehenen Enden des Zugfederstrangs miteinander zu verbinden, so dass die von den Dichtungssegmenten gebildete Dichtung mit ihrer Dichtfläche gegen die Antriebswelle gepresst wird. Gemäß einer bevorzugten Ausführungsform wird die Dichtung durch Anheben des Montagerings in die Betriebsposition verschoben, in welcher Betriebsposition die Dichtung formschlüssig an dem Dichtungseinsatzgehäuse und der Antriebswelle anliegt. Vorteilhafterweise wird nach der Demontage des Montagerings der Deckel mit Schrauben an dem Dichtungseinsatzgehäuse mit der Maßgabe angeschlossen, dass die an dem Deckel angeordneten Keile in die dichtungsseitigen Nuten eingreifen. Es liegt im Rahmen der Erfindung, dass die Dichtung verdrehsicher in dem Hohlraum durch das Zusammenwirken der deckelseitigen Keile mit den dichtungsseitigen Nuten gehalten wird.

Es empfiehlt sich, dass das Dichtungseinsatzgehäuse zumindest einen der Antriebswelle zugewandten Strömungskanal aufweist, wobei sich der Strömungskanal vollständig bzw. im Wesentlichen vollständig die Antriebswelle umlaufend in dem Dichtungseinsatzgehäuse erstreckt.

Zweckmäßigerweise ist in dem Dichtungseinsatzgehäuse und vorzugsweise in dem Tragring zumindest eine Sperrluftbohrung angeordnet, welche Sperrluftbohrung bevorzugt mit dem Strömungskanal verbunden ist. Es liegt im Rahmen der Erfindung, dass über den Umfang des Dichtungseinsatzgehäuses und/oder des Tragrings zumindest vier und besonders bevorzugt acht Sperrluftbohrungen angeordnet sind, durch die vorzugsweise Druckluft in den Strömungskanal eingeblasen wird. Empfohlenermaßen wird der Strömungskanal von einer antriebswellenseitigen Nut bzw. Vertiefung in dem Dichtungseinsatzgehäuse gebildet.

Gemäß einer bevorzugten Ausführungsform wird durch die Sperrluftbohrung Luft bzw. Druckluft mit einer Temperatur von vorzugsweise 20 °C bis 100 °C und bevorzugt von 40 °C bis 80 °C in den Strömungskanal gepresst. Es liegt im Rahmen der Erfindung, dass die Strömungsgeschwindigkeit der Luft bzw. Druckluft mit der Maßgabe eingestellt wird, dass Luft aus dem Gehäuse und abrasive Stoffe von der Dichtung fern gehalten bzw. weggeblasen werden. Es empfiehlt sich, dass die Temperatur und/oder der Volumenstrom des Luftstroms so eingestellt ist, dass die Betriebstemperatur der Dichtung 200 °C bis 400 °C und vorzugsweise 250 °C bis 350 °C beträgt. Betriebstemperatur meint im Rahmen der Erfindung die Temperatur, die dauerhaft an der Dichtung feststellbar ist, wenn die Kohlemühle in Betrieb ist.

Eine vorteilhafte Ausführungsform der erfindungsgemäßen Kohlemühle ist dadurch gekennzeichnet, dass in dem Dichtungseinsatzgehäuse zumindest eine Kontrollbohrung eingebracht ist, die in den Hohlraum mündet. Es ist möglich, durch die Kontrollbohrung eine Verschleißkontrolle durchzuführen bzw. die Abnutzung der Dichtung zu überwachen.

Gemäß einer Ausführungsform ist die Dichtung durch zumindest ein Anpresselement, das sich vorzugsweise am Deckel abstützt, gegen das Dichtungseinsatzgehäuse pressbar bzw. drückbar. Mit anderen Worten wird die Dichtung in Richtung der Drehachse der Antriebswelle an das Dichtungseinsatzgehäuse gedrückt. In einer bevorzugten Ausführungsform wird jedes Dichtungssegment mit zumindest einem und vorzugsweise zumindest zwei Anpresselementen gegen das Dichtungsgehäuse gedrückt.

Es empfiehlt sich, dass das Anpresselement aus einem Federelement und einer Druckplatte gebildet wird, wobei die Druckplatte im montierten Zustand des Anpresselements zwischen dem Federelement und der Dichtung angeordnet ist und wobei das Federelement an dem Deckel gehalten wird. Die durch die Federelemente auf die Dichtung ausgeübte Anpresskraft wird mittels der zwischen dem Federelement und der Dichtung zwischengeschalteten Druckplatte auf eine Fläche mit der Maßgabe verteilt, dass eine Beschädigung der Dichtung bzw. Dichtungssegmente zuverlässig vermieden wird. Gemäß einer Ausführungsform ist das Federelement als wendelförmige Feder ausgestaltet, die mit einer Schraubverbindung an dem Deckel fixiert ist.

In einer bevorzugten Ausführungsform ist das Dichtungseinsatzgehäuse aus zumindest zwei und vorzugsweise drei Dichtungseinsatzgehäusesegmenten gebildet, wobei der Deckel aus zumindest zwei und vorzugsweise drei Deckelsegmenten gebildet ist. In einer besonders bevorzugten Ausführungsform wird das Dichtungseinsatzgehäuse bzw. der Deckel von vier Dichtungseinsatzgehäusesegmenten bzw. Deckelsegmenten gebildet. Zweckmäßigerweise weist jedes Dichtungseinsatzgehäusesegment zumindest eine und bevorzugt zwei Sperrluftbohrungen und zumindest zwei und bevorzugt vier Kontrollbohrungen auf. In einer bevorzugten Ausführungsform der erfindungsgemäßen Kohlemühle sind die Dichtungseinsatzgehäusesegmente jeweils über vier Schrauben am Tragring fixiert bzw. angeschlossen.

Es empfiehlt sich, dass jedes Deckelsegment jeweils zwei Arretierungselemente aufweist, mit denen die Dichtung vor einem Verdrehen bzw. Mitdrehen mit der Antriebswelle gesichert wird. Zweckmäßigerweise weist jedes Deckelsegment zumindest zwei und vorzugsweise vier empfohlenermaßen als Gewindebohrungen ausgestaltete Lager zur Fixierung der Anpresselemente auf.

Der Erfindung liegt die Erkenntnis zugrunde, dass die Dichtung der erfindungsgemäßen Kohlemühle den Antrieb und die Umgebung der Kohlemühle zuverlässig vor Kohlestaub und anderen Verunreinigungen schützt. Wesentlich dafür ist das formschlüssige bzw. reibschlüssige Anliegen der Dichtung an der Antriebswelle bzw. an der die Antriebswelle umlaufenden Hülse. Die Erfindung weist weiterhin den Vorteil auf, dass das Spannelement jederzeit dafür sorgt, dass die Dichtung bzw. die die Dichtung bildenden Dichtungssegmente funktionssicher und spielfrei an die Antriebswelle angedrückt werden. Die bevorzugte Einblasung von Sperr- bzw. Kühlluft gewährleistet dabei, dass die erfindungsgemäße Dichtung zuverlässig vor dem Eindringen von abrasiven Substanzen in einen möglicherweise bestehenden Spalt zwischen der Dichtung und der Antriebswelle bzw. der Hülse geschützt ist. Fernerhin wird die maximale Betriebstemperatur der erfindungsgemäßen Dichtung im Betrieb der Kohlemühle auf überraschend einfache Weise auf ungefähr 300 °C beschränkt, so dass sich die erfindungsgemäße Dichtung durch eine hohe Betriebssicherheit und extreme Langlebigkeit auszeichnet. In Folge dessen zeichnet sich die erfindungsgemäße Kohlemühle auch durch hohe Wirtschaftlichkeit aus. Darüber hinaus ist der Verschleiß der erfindungsgemäßen Dichtung einfach und problemlos über die Kontrollbohrungen überprüfbar. Folglich kann der Zeitpunkt, an dem ein Dichtungswechsel erforderlich wird, exakt bestimmt werden.

Als besonders vorteilhaft hat sich die Materialbeschaffenheit der Dichtung herausgestellt, da auf diese Weise ein Verschleiß der Antriebswelle bzw. der die Antriebswelle umlaufenden Hülse funktionssicher vermieden bzw. minimiert wird. Bei einem Dichtungswechsel ist daher eine Überarbeitung der Antriebswelle bzw. Erneuerung der Hülse nicht erforderlich. Gewährt die erfindungsgemäße Dichtung keine ausreichende Dichtigkeit mehr, beschränken sich die Montage- bzw. Instandsetzungsarbeiten auf den Austausch der Dichtung. Dieser Austausch ist bei der erfindungsgemäßen Dichtung einfach, schnell und problemlos ohne den aufwendigen Einsatz großer Arbeitsgeräte möglich. Somit zeichnet sich die erfindungsgemäße Kohlemühle durch eine optimale Wartungsfreundlichkeit und Wirtschaftlichkeit aus, da die Wartung bzw. der Austausch einer Dichtung nur mit kurzen Stillstandzeiten verbunden ist.

Nachfolgend wird die Erfindung anhand einer lediglich ein Ausführungsbeispiel darstellenden Zeichnungen detailliert erläutert. Es zeigen
- Fig.1: einen Querschnitt durch eine erfindungsgemäße Kohlemühle,
- Fig. 2: eine Draufsicht auf einen Ausschnitt eines erfindungsgemäßen Dichtungseinsatzgehäuses mit Dichtung,
- Fig. 3: eine perspektivische Ansicht eines Ausschnitts des Tragrings mit an dem Tragring angeschlossenem Dichtungseinsatzgehäuse mit Dichtung und Deckel,
- Fig. 4a bis 4c: verschiedene Querschnitte des Dichtungseinsatzgehäuses und
- Fig. 5a und 5b: eine Draufsicht auf ein erfindungsgemäßes Dichtungsseg- ment.

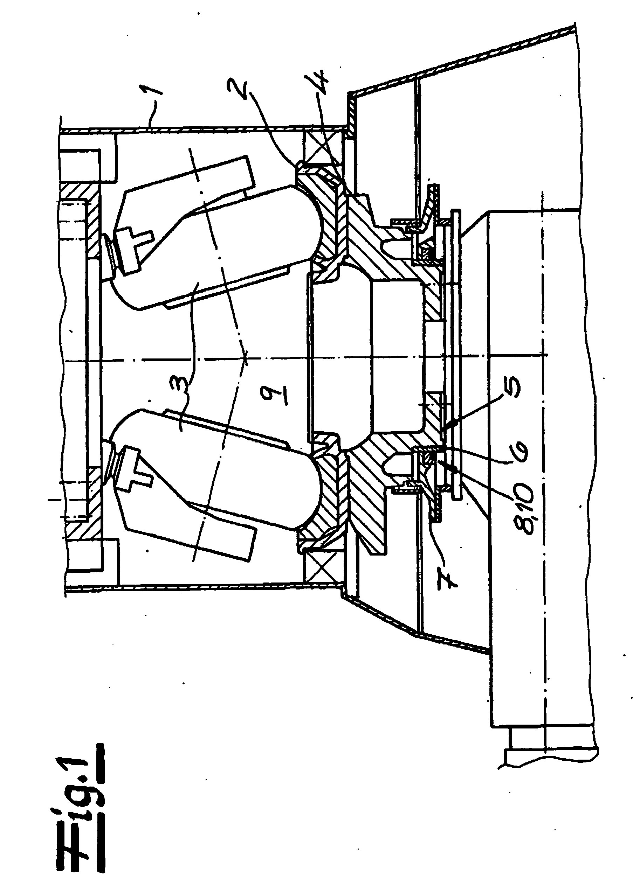

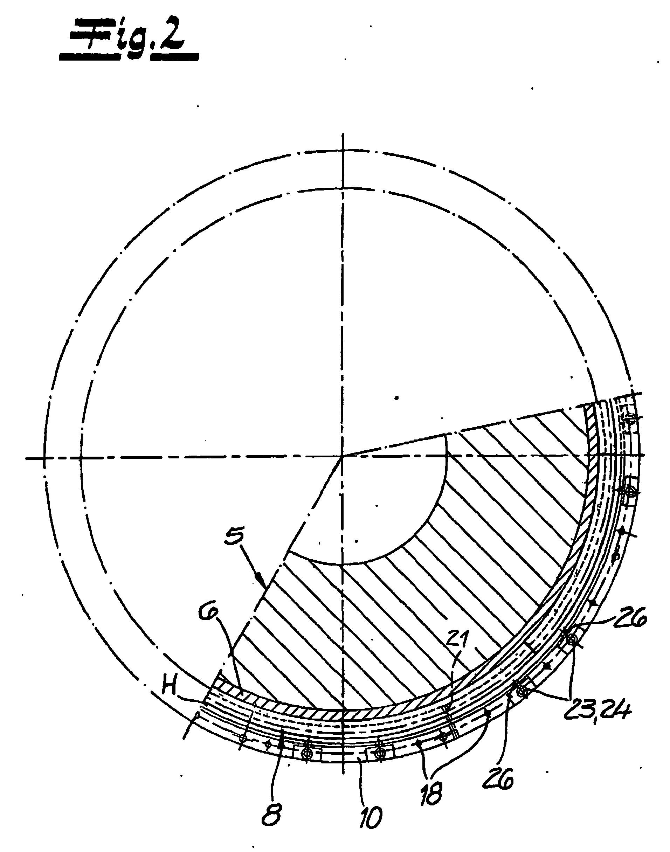

In Fig. 1 ist eine Kohlemühle dargestellt, die ein Gehäuse 1 aufweist, in dem eine Mahlschüssel 2 mit darin laufenden bzw. sich drehenden Mahlwalzen 3 angeordnet ist. In dem Ausführungsbeispiel gemäß Fig. 1 ist die Mahlschüssel 2 an einen Mahlschüsselträger 4 angeschlossen, der in dem Ausführungsbeispiel nach Fig. 1 einstückig mit der Antriebswelle 5 verbunden ist. In einer bevorzugten Ausführungsform und in dem Ausführungsbeispiel gemäß Fig. 1 ist die Antriebswelle 5 rund bzw. zylinderförmig ausgestaltet und von einer auf der Antriebswelle 5 drehfest gelagerten Büchse bzw. Schleißbüchse 6 umgeben. Gehäuseseitig ist ein Tragring 7 vorgesehen, der eine kreisrunde Öffnung definiert und die Antriebswelle 5 umgibt. Gemäß Ausführungsbeispiel nach Fig. 1 und 2 liegt eine ringförmige Dichtung 8 formschlüssig an der Schleißbüchse 6 und dem Tragring 7 an, so dass ein Innenraum 9 des Gehäuses 1 mit der Maßgabe gegen die das Gehäuse 1 umgebende Umwelt abgedichtet ist, dass keine in dem Innenraum 9 befindlichen Stäube und/oder Gase in die Umwelt gelangen können. An dem Tragring 7 ist gemäß Fig. 1 an der antriebsseitigen Oberfläche ein Dichtungseinsatzgehäuse 10 befestigt, das eine Öffnung bestimmt, durch die sich die Antriebswelle 5 mit der Schleißbüchse 6 erstreckt.

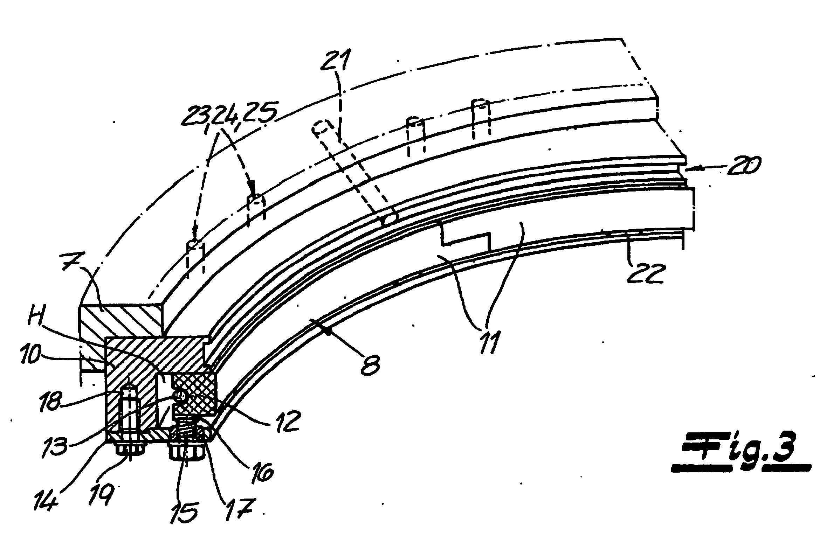

Die Dichtung 8 wird im Ausführungsbeispiel von acht Dichtungssegmenten 11 gebildet, von denen der besseren Übersichtlichkeit halber in Fig. 3 lediglich zwei dargestellt sind. Die Dichtungssegmente 11 ergänzen sich zu der ringförmigen Dichtung 8. Fernerhin ist in Fig. 3 erkennbar, dass die Dichtungssegmente 11 eine Aufnahmenut 12 für einen Zugfederstrang 13 aufweisen, mit welchem Zugfederstrang 13 die Dichtungssegmente 11 mit der Maßgabe zusammengezogen werden, dass die Dichtungssegmente 11 formschlüssig bzw. reibschlüssig an der Schieißbüchse 6 anliegen. In Fig. 3 ist nicht dargestellt, dass zwischen zwei benachbarten Dichtungssegmenten 11 jeweils ein Spiel von ungefähr 3 mm vorgesehen ist. Beim verschleißbedingten Abrieb der schleißbüchsenseitigen Oberfläche bzw. der Dichtfläche der Dichtungssegmente 11 ist jederzeit gewährleistet, dass trotz der Veränderung der Dicke in radialer Richtung der Dichtungssegmente 11 stets der Formschluss bzw. Reibschluss zwischen den Dichtungssegmenten 11 und der Schleißbüchse 6 gewährleistet ist, indem die Dichtungssegmente 11 in radialer Richtung zur Schleißbüchse 6 hin verschoben werden.

Weiterhin ist in Fig. 3 ein Deckel 14 dargestellt, der vorzugsweise mit Schraubverbindungen an dem Dichtungseinsatzgehäuse 10 fixiert ist. Zwischen dem Dichtungseinsatzgehäuse 10 und dem Deckel 14 wird gemäß Fig. 3 ein Hohlraum H ausgebildet, in dem die Dichtung 8 bzw, die Dichtungssegmente 11 angeordnet sind. In Fig. 3 ist darüber hinaus eine helixförmige Feder 15 gezeigt, die sich gegen eine Druckplatte 16 abstützt und an dem Deckel 14 mit einem Schraubbolzen 17 gelagert bzw. fixiert ist. Durch den von der Feder 15 auf die Druckplatte 16 ausgeübten Druck wird die Dichtung 8 bzw. das Dichtungssegment 11 in axialer Richtung bzw. in Richtung der Drehachse der Schleißbüchse 6 bzw. der Antriebswelle 5 an dem Dichtungseinsatzgehäuse anliegend gelagert. Mit anderen Worten ist während des Betriebs der Kohlemühle lediglich ein durch den Zugfederstrang hervorgerufenes Nachjustieren der Dichtungssegmente 11 in radialer Richtung auf die Schleißbüchse 6 hin möglich. In Fig. 3 ist nicht dargestellt, dass jedes Dichtungssegment 11 von jeweils zwei Federn 15 mit zugeordneten Druckplatten 16 an das Dichtungseinsatzgehäuse 10 gedrückt wird.

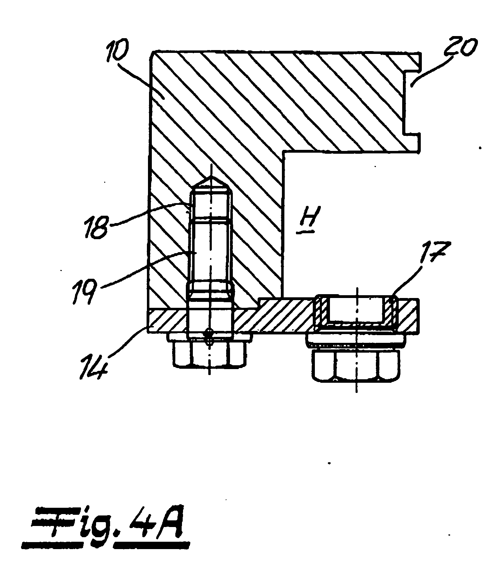

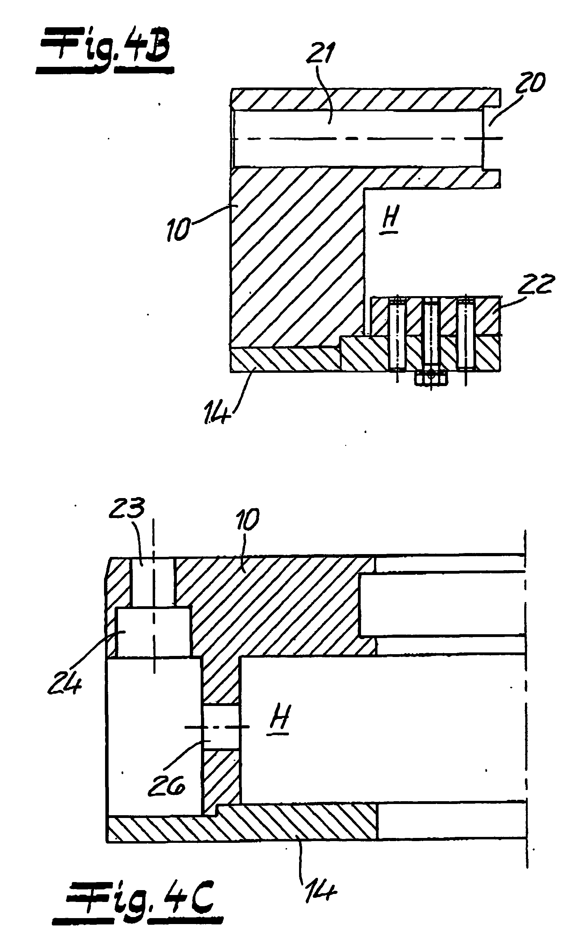

Fig. 4a zeigt einen Querschnitt durch das Dichtungseinsatzgehäuse 10 mit einer Gewindebohrung 18, in die eine Schraube 19 zur Fixierung des Deckels 14 an dem Dichtungseinsatzgehäuse greift. Fernerhin ist ein als Sperrluft- bzw. Kühlluftkanal 20 ausgestalteter Strömungskanal erkennbar, der sich über den vollständigen Umfang des Dichtungseinsatzgehäuses erstreckt. In Fig. 3 und 4b ist eine Sperrluftbohrung 21 dargestellt, die mit dem Sperrluftkanal 20 verbunden ist, so dass der Sperrluftkanal 20 mit einem Luftstrom beaufschlagbar ist. Auf diese Weise werden Verunreinigungen von der Dichtung 8 ferngehalten und in Richtung des Innenraums 9 des Gehäuses 1 geblasen. Im Ergebnis wird das Eindringen von abrasiven Stoffen bzw. Verunreinigungen zwischen Dichtung 8 und Schleißbüchse 6 funktionssicher vermieden.

Weiterhin ist in Fig. 4b eine als Keil 22 ausgestaltete Verdrehsicherung dargestellt, die gemäß Fig. 4b mit zwei Passfedem und einer Schraubverbindung am Deckel 14 fixiert ist.

In Fig. 4c ist ein weiterer Querschnitt eines Abschnitts des Dichtungseinsatzgehäuses 10 dargestellt, der eine Bohrung 23 mit einer Erweiterung 24 aufweist, in welche Bohrung 23 eine Schraube zur Fixierung des Dichtungseinsatzgehäuses 10 in eine tragringsseitige Gewindebohrung 25 einschraubbar ist. Vorzugsweise und gemäß Ausführungsbeispiel nach Fig. 4c wird der Schraubenkopf in die Erweiterung 24 versenkt, so dass eine Kontrollbohrung 26 problemlos zugänglich ist. Durch die Kontrollbohrung 26 ist der Abrieb bzw. Verschleiß der Dichtung 8 mittels einer nicht dargestellten Messvorrichtung überprüfbar.

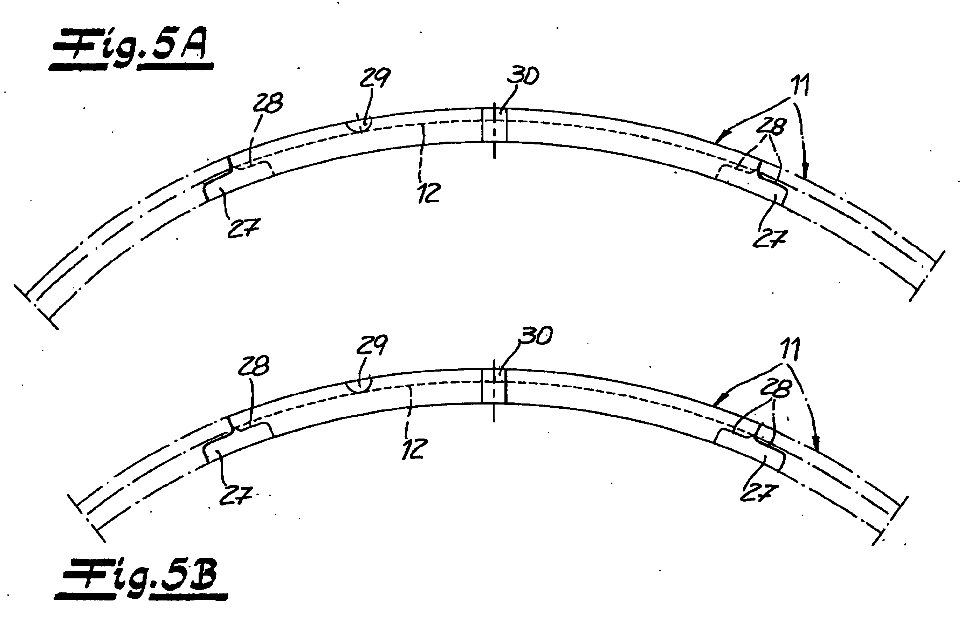

In Fig. 5a und 5b sind erfindungsgemäße Dichtungssegmente 11 dargestellt, wobei das Dichtungssegment 11 gemäß Fig. 5a an seinen beiden Enden über jeweils einen Zapfen 26 verfügt, die in Ausnehmungen 28 benachbarter Dichtungssegmente 11 greifen. Vorzugsweise und gemäß der Ausführungsbeispiele nach Fig. 5a und 5b verfügt ein Dichtungssegment 11 an seinen beiden Enden jeweils über Zapfen 27 oder Ausnehmungen 28. Gestrichelt ist in den Ausführungsbeispielen nach Fig. 5a und 5b die Aufnahmenut 12 für den Zugfederstrang 13 dargestellt. Weiterhin ist in jedem Dichtungssegment 11 gemäß Fig. 5a und 5b jeweils eine Kerbe 29 gezeigt, die ungefähr die gleiche Tiefe wie die Aufnahmenut 12 aufweist. Mit einem geeigneten, nicht dargestellten Werkzeug ist es möglich, den Zugfederstrang 13 im Bereich der Kerbe 29 zu untergreifen und aus der Aufnahmenut 12 zu heben. In Fig. 5a und 5b ist nicht dargestellt, dass die Dichtungssegmente 11 im montierten Zustand ein Spiel zueinander von ungefähr 3 mm aufweisen, so dass ein Verschieben der Dichtungssegmente 11 gegeneinander und in Folge dessen auch in Richtung der Schleißbüchse 6 möglich ist, wenn die schleißbüchsenseitige Dichtfläche der Dichtungssegmente 11 im Betrieb abnutzt.

Darüber hinaus weisen die Dichtungssegmente 11 jeweils eine Vertiefung 30 auf, in die im montierten Zustand der Dichtung 8 die deckelseitigen Keile 22 greifen, um einen verdrehsicheren Sitz der Dichtung 8 in dem Hohlraum H zu gewährleisten.

## Patentansprüche

1. Kohlemühle mit einem Gehäuse (1), einem Antrieb, einer Antriebswelle (5) und einem Mahlschüsselträger (4), wobei der Mahlschüsselträger (4) durch die Antriebswelle (5) mit dem Antrieb verbunden ist, wobei die Antriebswelle (5) von einem gehäuseseitigen Tragring (7) umgeben ist, wobei eine Dichtung (8) die Antriebswelle (5) vollständig bzw. im Wesentlichen vollständig umläuft und wobei die Dichtung (8) formschlüssig an der Antriebswelle (5) anliegt und die Antriebswelle (5) gegen den Tragring (7) abdichtet und wobei die Dichtung (8) aus zumindest zwei Dichtungssegmenten (11) gebildet wird, die sich zu der ringförmigen Dichtung (8) ergänzen,
wobei,
die Dichtung (8) drehfest an den Tragring (7) angeschlossen ist und
die Dichtung (8) mittels eines Spannelements an die Antriebswelle (5) anpressbar ist.

2. Kohlemühle nach Anspruch 1, **dadurch gekennzeichnet, dass** die Dichtung (8) zumindest größtenteils und vorzugsweise vollständig aus Graphit besteht.

3. Kohlemühle nach einem der Ansprüche 1 oder 2, **dadurch gekennzeichnet, dass** die Dichtung (8) aus zumindest vier Dichtungssegmenten (11) gebildet ist.

4. Kohlemühle nach einem der Ansprüche 1 bis 3, **dadurch gekennzeichnet, dass** das Spannelement ein Zugfederstrang (13) ist.

5. Kohlemühle nach einem der Ansprüche 1 bis 4, **dadurch gekennzeichnet, dass** die Dichtung (8) eine umlaufende Aufnahmenut (12) aufweist, in der das Spannelement aufgenommen ist.

6. Kohlemühle nach einem der Ansprüche 1 bis 5, **dadurch gekennzeichnet, dass** an dem Tragring (7) ein Dichtungseinsatzgehäuse (10) mit einem Deckel (14) angeschlossen ist und wobei zwischen dem Dichtungseinsatzgehäuse (10) und dem Deckel (14) ein Hohlraum (H) ausgebildet ist, in dem die Dichtung (8) aufgenommen ist.

7. Kohlemühle nach Anspruch 6, **dadurch gekennzeichnet, dass** die Dichtung (8) verdrehsicher in dem Hohlraum (H) angeordnet ist, wobei zumindest ein deckelseitiges Arretierungselement mit zumindest einem dichtungsseitigen komplementären Arretierungselement zusammenwirkt.

8. Kohlemühle nach einem der Ansprüche 6 oder 7, **dadurch gekennzeichnet, dass** das Dichtungseinsatzgehäuse (10) zumindest einen der Antriebswelle (5) zugewandten Strömungskanal aufweist und wobei sich der Strömungskanal vollständig bzw. im Wesentlichen vollständig die Antriebswelle (5) umlaufend in dem Dichtungseinsatzgehäuse (10) erstreckt.

9. Kohlemühle nach Anspruch 8, **dadurch gekennzeichnet, dass** in dem Dichtungseinsatzgehäuse (10) und vorzugsweise in dem Tragring (7) zumindest eine Sperrluftbohrung (21) angeordnet ist und wobei die Sperrluftbohrung (21) mit dem Strömungskanal verbunden ist.

10. Kohlemühle nach einem der Ansprüche 6 bis 9, **dadurch gekennzeichnet, dass** in dem Dichtungseinsatzgehäuse (10) zumindest eine Kontrollbohrung (26) eingebracht ist, die in den Hohlraum (H) mündet.

11. Kohlemühle nach einem der Ansprüche 6 bis 10, **dadurch gekennzeichnet, dass** die Dichtung (8) durch zumindest ein Anpresselement, das sich vorzugsweise am Deckel (14) abstützt, gegen das Dichtungseinsatzgehäuse (10) pressbar bzw. drückbar ist.

12. Kohlemühle nach Anspruch 11, **dadurch gekennzeichnet, dass** das Anpresselement aus einem Federelement und einer Druckplatte (16) gebildet wird, wobei die Druckplatte (16) im montierten Zustand des Anpresselements zwischen dem Federelement und der Dichtung (8) angeordnet ist und wobei das Federelement an dem Deckel (14) gehalten wird.

13. Kohlemühle nach einem der Ansprüche 6 bis 12, **dadurch gekennzeichnet, dass** das Dichtungseinsatzgehäuse (10) aus zumindest zwei und vorzugsweise drei Dichtungseinsatzgehäusesegmenten gebildet ist und wobei der Deckel (14) aus zumindest zwei und vorzugsweise drei Deckelsegmenten gebildet ist.

## Claims

1. A coal mill with a housing (1), a drive, a drive shaft (5) and a milling key carrier (4), wherein the milling key carrier (4) is connected by the drive shaft (5) with the drive, wherein the drive shaft (5) is enveloped by a housing-side bearer ring (7), wherein a seal (8) runs completely or essentially completely around the drive shaft (5), and wherein the seal (8) abuts positively against the drive shaft (5) and seals the drive shaft (5) against the bearer ring (7), and wherein the seal (8) is comprised of at least two sealing segments (11), which enhance each other to form the annular seal (8),
wherein
the seal (8) is attached to the bearer ring (7) locked against rotation, and
the seal (8) can be pressed against the drive shaft (5) by means of a clamping element.

2. The coal mill according to claim 1, **characterized in that** the seal (8) consists mostly and preferably completely of graphite.

3. The coal mill according to one of claims 1 or 2, **characterized in that** the seal (8) is comprised of at least four sealing segments (11)

4. The coal mill according to one of claims 1 to 3, **characterized in that** the clamping element is a tension spring arrangement (13).

5. The coal mill according to one of claims 1 to 4, **characterized in that** the seal (8) exhibits a continuous location groove (12), which incorporates the clamping element.

6. The coal mill according to one of claims 1 to 5, **characterized in that** a sealing insert housing (10) with a cover (14) is secured to the bearing ring (7), and wherein a hollow space (H) that incorporates the seal (8) is formed between the sealing insert housing (10) and the cover (14).

7. The coal mill according to claim 6, **characterized in that** the seal (8) is situated in the hollow space (H) locked against rotation, wherein at least one locking element on the cover side interacts with at least one complementary locking element on the seal side.

8. The coal mill according to one of claims 6 or 7, **characterized in that** the sealing insert housing (10) exhibits at least one flow channel facing the drive shaft (5), and wherein the flow channel extends into the sealing insert housing (10), running completely or essentially completely around the drive shaft (5).

9. The coal mill according to claim 8, **characterized in that** the sealing insert housing (10) and preferably the bearer ring (7) integrate at least one sealing air borehole (21), and wherein the sealing air borehole (21) is connected with the flow channel.

10. The coal mill according to one of claims 6 to 9, **characterized in that** the sealing insert housing (10) incorporates at least one control borehole (26), which empties into the hollow space (H).

11. The coal mill according to one of claims 6 to 10, **characterized in that** the seal (8) can be squeezed or pressed against the sealing insert housing (10) by means of at least one pressing element, which preferably abuts the cover (14).

12. The coal mill according to claim 11, **characterized in that** the pressing element is comprised of a spring element and pressure plate (16), wherein the pressure plate (16) is situated between the spring element and seal (8) with the pressing element in an assembled state, and wherein the spring element is held on the cover (14).

13. The coal mill according to one of claims 6 to 12, **characterized in that** the sealing insert housing (10) is comprised of at least two, and preferably three, sealing insert housing segments, and wherein the cover (14) is formed out of at least two, and preferably three, cover segments.

## Revendications

1. Broyeur à charbon avec une caisse (1), un entraînement, un arbre d'entraînement (5) et un support de plateau de broyage (4), dans lequel le support de plateau de broyage (4) est relié à l'entraînement par l'arbre d'entraînement (5), dans lequel l'arbre d'entraînement (5) est entouré par un anneau porteur (7) situé côté caisse, dans lequel un joint d'étanchéité (8) entoure complètement ou quasiment complètement l'arbre d'entraînement (5), et dans lequel le joint d'étanchéité (8) s'applique par complémentarité de forme sur l'arbre d'entraînement (5) et isole l'arbre d'entraînement (5) par rapport à l'anneau porteur (7), et dans lequel le joint d'étanchéité (8) est constitué d'au moins deux segments d'étanchéité (11) formant ensemble le joint d'étanchéité annulaire (8),
dans lequel
le joint d'étanchéité (8) est raccordé fixement à l'anneau porteur (7) et
le joint d'étanchéité (8) peut être pressé contre l'arbre d'entraînement (5) au moyen d'un élément de serrage.

2. Broyeur à charbon selon la revendication 1, **caractérisé en ce que** le joint d'étanchéité (8) est constitué au moins majoritairement et de préférence entièrement de graphite.

3. Broyeur à charbon selon la revendication 1 ou 2, **caractérisé en ce que** le joint d'étanchéité (8) est constitué d'au moins quatre segments d'étanchéité (11).

4. Broyeur à charbon selon l'une des revendications 1 à 3, **caractérisé en ce que** l'élément de serrage est un boudin de ressort de traction (13).

5. Broyeur à charbon selon l'une des revendications 1 à 4, **caractérisé en ce que** le joint d'étanchéité (8) comporte une rainure d'admission périphérique (12), dans laquelle est admis l'élément de serrage.

6. Broyeur à charbon selon l'une des revendications 1 à 5, **caractérisé en ce qu'**un boîtier d'élément d'étanchéité (10) avec un couvercle (14) est raccordé à l'anneau porteur (7), et dans lequel un espace creux (H) est formé entre le boîtier d'élément d'étanchéité (10) et le couvercle (14), pour accueillir le joint d'étanchéité (8).

7. Broyeur à charbon selon la revendication 6, **caractérisé en ce que** le joint d'étanchéité (8) est agencé sans possibilité de rotation dans l'espace creux (H), dans lequel au moins un élément de blocage côté couvercle coopère avec au moins un élément de blocage complémentaire du côté du joint d'étanchéité.

8. Broyeur à charbon selon l'une des revendications 6 ou 7, **caractérisé en ce que** le boîtier d'élément d'étanchéité (10) comporte au moins un canal d'écoulement tourné vers l'arbre d'entraînement (5), et dans lequel le canal d'écoulement s'étend en encerclant entièrement ou quasiment entièrement l'arbre d'entraînement (5), dans le boîtier d'élément d'étanchéité (10).

9. Broyeur à charbon selon la revendication 8, **caractérisé en ce qu'**au moins un perçage à air de barrage (21) est prévu dans le boîtier d'élément d'étanchéité (10) et de préférence dans l'anneau porteur (7), et dans lequel le perçage à air de barrage (21) est relié au canal d'écoulement.

10. Broyeur à charbon selon l'une des revendications 6 à 9, **caractérisé en ce qu'**au moins un perçage de contrôle (26) débouchant dans l'espace creux (H) est intégré dans le boîtier d'élément d'étanchéité (10).

11. Broyeur à charbon selon l'une des revendications 6 à 10, **caractérisé en ce que** le joint d'étanchéité (8) peut être pressé ou serré contre le boîtier d'élément d'étanchéité (10), par au moins un élément de pression prenant appui de préférence sur le couvercle (14).

12. Broyeur à charbon selon la revendication 11, **caractérisé en ce que** l'élément de pression est constitué d'un élément à ressort et d'une plaque de pression (16), dans lequel la plaque de pression (16), est agencée entre l'élément à ressort et le joint d'étanchéité (8), dans l'état monté de l'élément de pression, et dans lequel l'élément à ressort est maintenu sur le couvercle (14).

13. Broyeur à charbon selon l'une des revendications 6 à 12, **caractérisé en ce que** le boîtier d'élément d'étanchéité (10) est constitué d'au moins deux et de préférence de trois segments de boîtier d'élément d'étanchéité, et dans lequel le couvercle (14) est constitué d'au moins deux et de préférence de trois segments de couvercle.
